# EUROPEAN PATENT APPLICATION

(11) **EP 1 621 978 A2**
(43) Date of publication of application: **01.02.2006**
(21) Application number: 05003709.2
(22) Date of filing: 22.02.2005
(51) Int. Cl.: G06F 3/033

(54) **Input device for controlling a cursor**

(30) Priority: 27.02.2004 SE 0400486
(71) Applicant: Ergoption AB, 116 32 Stockholm (SE)
(72) Inventor: Drougge, Gunnar, 116 32 Stockholm (SE)
(74) Representative: Nyberg, Bengt

(57) **Abstract**

An input device for controlling a cursor on a screen, which can be used ample with a keyboard. The input device is arranged on a substantially horizontal base and enclosed by an enclosure comprising a number of apertures arranged on said base, which device comprises a movable surface capable of rotation, translation as well as motion directed towards the base, wherein a portion of said surface is available for manipulation through a first aperture in the enclosue; means for detection adapted to detect the rotation and translation of the surface; a connection to a communication device adapted to carry information relating to the movements of the surface. The device is characterized in that said means for detection comprises: a first detection unit adapted to detect movement of the surface in order to emit a first signal comprising information relating to the horizontal movement of the cursor on the screen; and a second detection unit adapted to detect movement of the surface in order to emit a second signal comprising information relating to the vertical movement of the cursor on the screen.

## Description

### Technical field

The present invention generally relates to input devices or pointing devices, and more particularly to an input device for controlling a cursor on a screen.

### Background art

Traditionally the computer mouse has been the primary vehicle for users to control the movement of a cursor on a screen. Although the mouse is easy to use, it has disadvantages. In addition to the fact that the manoeuvring of the mouse requires a relatively large desk space, a drawback is that the user's hand must be removed from the keyboard to use the mouse. A further drawback which is considerably more important are the stress injuries that the use of the computer mouse has been demonstrated to cause to its users. This is due to the static work involved in using the mouse and the fact that a traditional mouse is used at a distance from the user which is not ergonomic, since it increases the static stress in the muscles being used by the user. This is due to the fact that the mouse frequently is being manoeuvred relatively far away from the user's body.

WO02/43046 discloses an input device for controlling a cursor, intended to replace the traditional mouse. In the device the user controls the cursor by manipulating a rod, or another form of rotating surface, the movements of which are detected optically or mechanically by means of a fixed mounted detection mechanism/optics. The rotateable rod/surface directs the cursor upwards by means of being rotated towards the keyboard and downwards by means of being rotated away from the keyboard. In order to displace the cursor laterally the rod/surface is translated right or left, depending on the desired direction in which to displace the cursor. An important feature of the device is the enabling of a "left click" (which is obtained by clicking the left button of a traditional mouse) by depressing the rod/surface, and thereby the marking of a desired object on the screen. The "click" is obtained as a part connected to the bar/surface depresses a switch when the user depresses the rod/surface. This way the user can easily control the cursor and mark objects using merely one finger if desired. When the user clicks on a desired object on the screen by depressing the positioning surface/rod, it is important that this can be performed without the cursor simultaneously being displaced. In the device disclosed in W00243046 this has been solved by locating the optical sensor, detecting the movement of the surface/rod, substantially vertically beneath the surface being detected, so that the vertical motion of the surface generated by depressing said surface, i.e. upon a "left click", is not registered as a motion. When the surface traverses straight towards the sensor the movement of the surface is not sensed by the sensor. This enables a click function without the cursor being displaced, which is necessary when small objects on the screen are being handled. As a consequence of such arrangement the total height of the product will be relatively high, since sensor, circuit board, as well as the movable surface or rod, all are stacked on top of each other and encapsulated in a plastic enclosure. This construction results in an increase of the total height of the device, and makes the product too high in relation to the keyboards in front of which it is to be placed. The product may prove difficult to be built in into keyboards or laptops. A too large difference between the desk surface and top surface of the product may lead to stress injuries to the users. Accordingly, it would thus be perceived as a great advantage could the height of the product be reduced without sacrificing the fundamental functionality.

### Brief description of the invention

It is an object of the present invention to provide an input device for controlling a cursor on a screen having improved ergonomic characteristics and with retained high functionality.

The above and other objects are achieved according to the present invention by means of a device having the technical features defined in the independent claim. Preferred embodiments are defined in the dependent claims.

For the sake of clarity the terms "horizontal" and ''vertical'', respectively, refer to the direction of movement of the cursor on the screen horizontally and vertically, respectively.

According to a first aspect of the present invention an input device for controlling a cursor on a screen is provided, the device being arranged on a substantially horizontal base and encapsulated by an enclosure comprising a number of apertures and being arranged on said base, which device comprises a movable surface capable of rotation, translation as well as motion directed towards the base, wherein a portion of the surface is available for manipulation through a first aperture in the enclosure; means for detection adapted to detect rotation and translation of the surface; a connection to a communication device adapted to carry information relating to the movements of the surface. The device is characterized in that said means for detection comprises: a first detection unit adapted to detect movement of the surface in order to emit a first signal comprising information relating to the horizontal movement of the cursor on the screen; and a second detection unit adapted to detect movement of the surface in order to emit a second signal comprising information relating to the vertical movement of the cursor on the screen.

The present invention is thus based on the idea that a first detection unit is adapted to acquire information relating to the movement of the surface corresponding to the horizontal movement of the cursor on the screen, and a second detection unit is adapted to acquire information relating to the movement of the surface corresponding to the vertical movement of the cursor on the screen. In other words the two detection units are operating independently of each other, Accordingly, it is also possible to place the detection units independently of each other, and thus, they can be placed so as to minimize the height of the input device while a high functionality is retained. While also allowing the device thereby to be built lower, since it does not require a sensor placed beneath the movable surface/rod as in the prior art, see for example WO02/430346, the construction according to the present invention results in a substantial elimination of the undesired displacement of the cursor, which may result from a left click. The advantages of the invention over the prior art are consequently that the device can be built lower/thinner than prior art devices. The difference in level between the top of the product and the desk is reduced and this leads to a decreased risk for stress injuries to the user. Also, the functionality is retained in that it is possible to mark a desired object by depressing the movable surface without a simultaneous undesired movement of the cursor.

Further objects and advantages of the present invention will be discussed below by means of exemplary embodiments-

### Brief description of the drawings

Exemplary embodiments of the invention will be described below with reference to the attached drawings, in which
- Figure 1: shows a schematic perspective view of an input device according to the first embodiment of the invention;
- Figure 2: shows a schematic view from above of the input device of figure 1;
- Figure 3: shows a sectional view along the line A-A in figure 2;
- Figure 4: shows a schematic perspective view of an input device according to a second embodiment of the invention; and
- Figure 5: shows a schematic view from above of the input device in figure 1, wherein the connection of the sensors to a signal procesing device is illustrated.

### Description of preferred embodiments

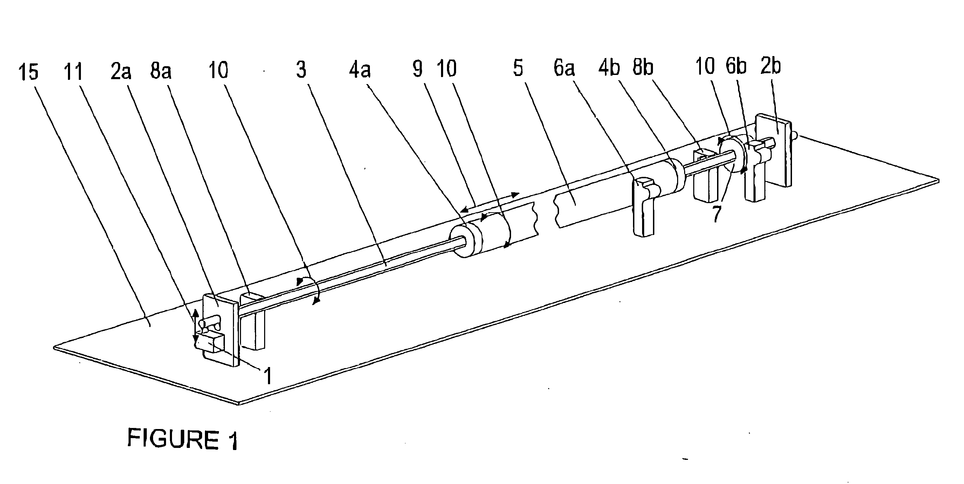

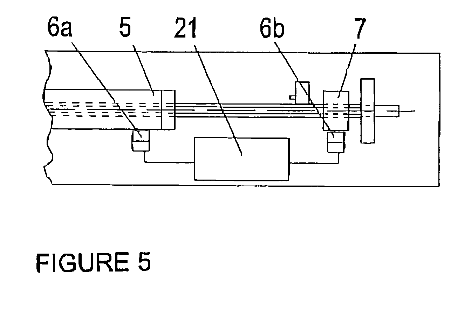

With reference to figures 1, 2, 3 and 5 a first embodiment of the input device according to the present invention will be described. The input device is preferably arranged on a substantially horizontal base 15. The base 15 can be comprised of the lower casing of a laptop or the lower casing of a keyboard or the lower casing of a palm rest, depending on the product into which the device is to be implemented. The base 15 is the part of the enclosure generally resting on a desktop surface. The base 15 is adapted to support the input device built into a keyboard, alternatively built into a laptop or a palm rest. The input device is preferably enclosed by an enclosure (not shown) having a number of apertures, which is arranged on the base 15; a movable surface 5 capable of rotation, translation, as well as motion directed towards the base 15. The surface 5 could be the sleeve of the rod 5 or e.g. a sheeting tightened around a core or at least two rods, see for example figure 5

In the following an embodiment exhibiting a rod 5 will be described, the movements of which rod are detected, while the skilled person, as mentioned above, however, will appreciate that a rotating sheeting could be used as well. A portion of the surface 5 is available for manipulation through a first aperture in the enclosure. Further, means for detection 6a, 6b are provided to detect translation and rotation of the surface. In a preferred embodiment said means for detection are comprised of a first detection unit 6a adapted to detect or register translation of the surface, as indicated by the arrow 9, and a second detection unit 6b is adapted to detect or register rotation of the surface, as indicated by the arrow 10. The detection units can for example be standard type optical sensors. Via a connection adapted to carry information relating to the movements of the surface, the sensors 6a, 6b are connected to a communication device (not shown) via a signal processing device 21, see figure 5, for processing of signals from the sensors 6a, 6b, as will be described in more detail below.

The surface 5 can also be pressed downwards so as to activate a signal corresponding to the one generated upon a left click on a computer mouse. The signal is obtained by means of the closing of a switch 1 as the surface is depressed downwards. The device can further be provided with switches 8a, 8b to signal when the rod 5 has reached either of its end positions. This is to enable the cursor to continue in the desired direction although the rod has reached an end position.

Said first and second sensors 6a, 6b are used to detect the movement of the rod, providing a possibility to reduce the total height of the product, since the sensors according to the present invention can be arranged in a plane through the rod or the surface, substantially parallel to the base 15. Furthermore, the risk of misinterpretation of the left click function is considerably reduced (when a sensor is being used there is a risk of the sensor misinterpreting the click function as a rotational motion if the motion is not directed exactly towards the sensor).

According to the first embodiment a first signal generated by the translation 9 and rotation 10 of the surface 5 is acquired from the first sensor 6a, and a second signal generated by the translation 9 and rotation 10 of the surface 5 is acquired from the second sensor 6a, i.e. the signal from the sensors 6a, 6b, respectively, contains a vertical component generated by the rotation of the surface and a horizontal component generated by the translation of the surface. Thereafter, the first signal and the second signal are processed by the signal processing unit 21, so that the information relating to the vertical component of the signal from the first sensor 6a is filtered off, and the information relating to the horizontal component of the other sensor 6b is filtered off. Subsequently the signal components are added in order to provide a processed control signal determining the direction of movement of the cursor, wherein the vertical component dictates the vertical movement of the cursor and the horizontal component, consequently, the horizontal movement. The person skilled in the art will appreciate that the above described method for processing input signals of the above mentioned type in order to obtain an output signal controlling a cursor in a desired manner is merely an example and that there will be a large number of alternative methods to the one described. As an example, the respective signal can be filtered as described above in connection to the respective sensor, and, thereafter, the remaining components can be added in e.g. adder, thereby obtaining the desired control signal for the cursor. Furthermore, the signal processing unit can be incorporated into the input device or arranged externally.

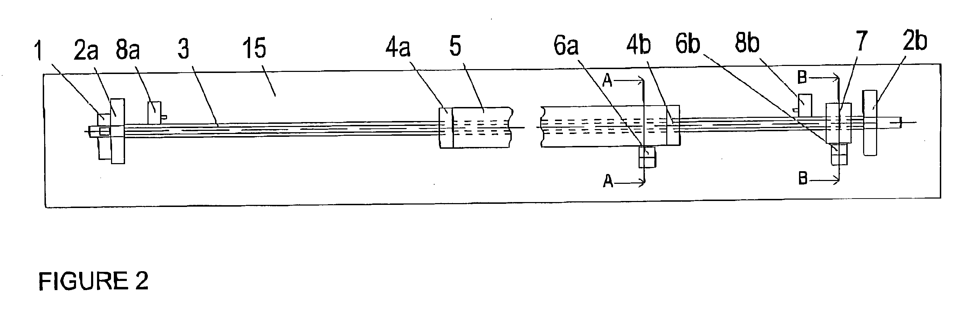

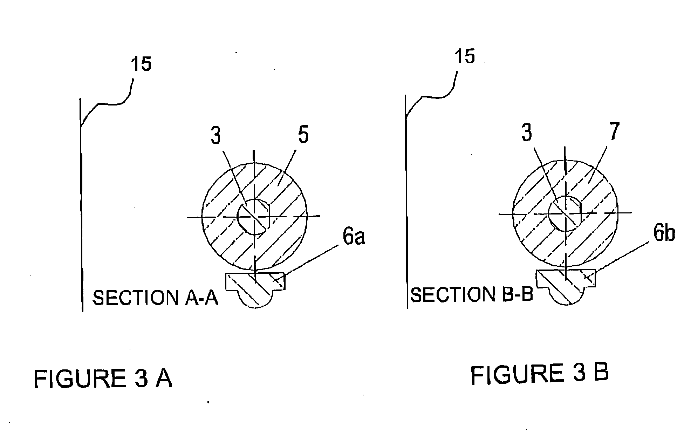

By virtue of the fact that two sensors are being used as described above instead of one, they can be placed on different locations along the rod/ surface. The sensor 6b thus registers the vertical movement signal generated by the rotation of the surface, and is preferably positioned adjacent to the fixed point of suspension 2b of the rod/surface. With reference to figure 3b a section along the line B-B in figure 2 is shown illustrating the positioning of the sensor 6b in relation to the surface 7. At this point only rotation of the internal axis 3 is allowed for, i.e. the axis cannot be moved either horizontally or vertically in this point. The outer sleeve 5 is slidable on the inner axis 3. The axis 3 rotates as the outer sleeve 5 rotates, since the axis 3 is not circular but instead exhibits same irregular shape as the aperture in the slide bearings 4a, 4b, except for a small clearance provided in order to enable the outer sleeve 5 to slide horizontally in the direction of the axis 3 while at the same time causing the axis 3 to rotate as the outer sleeve 5 is being rotated. In this manner the sleeve 5 is allowed to slide along the axis 3, and when the sleeve 5 is brought into rotation the inner axis 3 will also rotate. At one end of the axis 3, adjacent to the point of fixation 2b, a fixedly mounted sleeve 7 is located, similar to the one which is slidable along the axis 3. The sleeve 7 can be short, since its purpose is to serve as a detection surface for the sensor 6b acquiring the signal for the vertical motion of the cursor. Since this sensor according to this embodiment is positioned adjacent to the point of fixation of the axis, the motion resulting when the user clicks on the rod (sleeve) 5 will be negligibly small and will not affect the manoeuvring of the cursor. According to this embodiment the left click signal is generated by means of switch 1, arranged adjacent to the point of suspension 2a where only a small vertical movement is enabled. This is due to the fact that the point of fixation 2a is provided with a small aperture controlling the movement. The second sensor 6a is arranged so that it always can detect the movable surface, irrespective of whether it is displaced into one of its end positions. At this location the vertical click movement will be relatively large but does not affect the cursor since the sensor 6a only registers horizontal motion as described above. With reference to figure 3b a section along the line A-A in figure 2 is shown demonstrating the location of the sensor 6a in relation to the surface 5.

By virtue of the fact that the sensors 6a, 6b only register horizontal or vertical motion as described above, the sensors can be located where they are fitted best, instead of substantially vertically beneath the movable surface, as long as they are located so that they are able to register the movements of the surfaces 5 and 7 as described above. The device is also provided with buttons allowing the functions required of a computer mouse easily to be generated. The device is also provided with an additional signal distributor enabling connection of an external computer mouse to the product in order thereby to be able to switch between the product and a usual computer mouse. The device is also provided with a number of switches by means of which the functions of the buttons can be altered, instead of using software requiring installation into the computer being used.

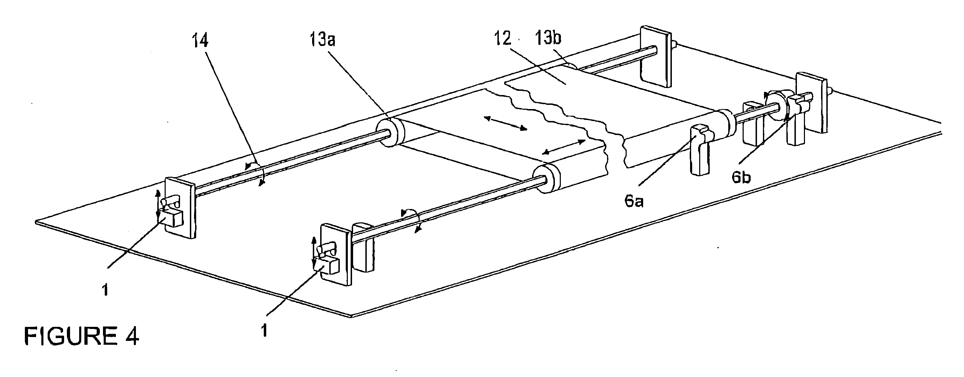

With reference to figure 4, a schematic perspective view of a second embodiment of the input device according to the invention is shown. Parts similar to those in the embodiment shown in figure 1 are indicated by similar reference numerals. The function of the input device according to the second embodiment is the same as in the first embodiment, and will therefore not be explained in the following. In this embodiment the movable surface is comprised of a sheeting 13 capable of rotation, translation as well as motion directed towards the base 15 on depression thereof. The sheeting rotates around a first sleeve, which sleeve functions in the same way as the rod 5 in the first embodiment, and around the sleeves 13a and 13b. It should be noticed that any number of sleeves can be used. For example, the sheeting can be arranged on four sleeves. A portion of the surface or sheeting 12 is available for manipulation through a first aperture of an enclosure (not shown). Furthermore, as in the first embodiment, means for detection 6a, 6b are arranged to detect the translation and rotation of the surface. Said means function in the same way as in the first embodiment described above, and will therefore not be described in the following. Furthermore, via a connection adapted to carry information relating to the movements of the surface, the sensors 6a, 6b are connected to a communication device (not shown) via a signal processing device 21, see figure 5, for processing of signals from the sensors 6a, 6b.

The sheeting 12, can also be pressed downwards so as to activate a signal corresponding to the one generated upon a left click on a computer mouse. The signal is obtained by means of the closing of a switch 1 as the surface is depressed downwards. In this embodiment the device is provided with two switches 1. The device can also be provided with switches to signal when the sheeting 12 has reached either of its end positions. This is to enable the cursor to continue in the desired direction although the rod has reached an end position.

Although specific embodiments have been disclosed herein for the purpose of illustrating and exemplifying the invention, the specific embodiments shown and disclosed can be replaced with a large number of alternative and/or equivalent implementations without departure from the claimed scope of invention as defined by the attached claims. This application is intended to cover all alterations and variants of the preferred embodiments disclosed above. Consequently, the present invention is defined by the wordings of the independent claim and any equivalents thereto.

## Claims

1. Input device for controlling a cursor on a screen arranged on a substantially horizontal base and encapsulated by an enclosure comprising a number of apertures arranged on said base, said device comprising
a movable surface capable of rotation, translation as well as motion directed towards said base, a portion of said base being available for manipulation through a first aperture in said enclosure;
means for detection adapted to detect rotation and translation of said surface:
a connection to a communication device adapted to carry information relating to the movements of said surface, **characterized in that** said means for detection comprises:
a first detection unit adapted to detect movement of said surface in order to emit a first signal comprising information relating to the translation and rotation of said surface; and
a second detection unit adapted to detect movement of said surface in order to emit a second signal comprising information relating to the translation and rotation of said surface; and
said input device further comprising signal processing means connected to said first and second detection units and adapted to process said first signal and
said second signal in order to emit a control signal for the horizontal and vertical movements of the cursor by filtrating off any information relating to rotation of the surface contained in said first signal, and any information relating to translation of said surface contained in said second signal, respectively.

2. Input device according to claim 1, wherein said first detection unit and said second detection unit are arranged in a plane intersecting the rotational axis of said surface and being substantially parallel to said base.

3. Input device according to claim 1, wherein said second detection unit is arranged at a point of suspension for said surface.

4. Input device according to claim 1, wherein said first detection unit is adapted to detect said surface irrespective of its position.
